# EUROPEAN PATENT APPLICATION

(11) **EP 3 945 009 A1**
(43) Date of publication of application: **02.02.2022**
(21) Application number: 21187205.6
(22) Date of filing: 22.07.2021
(51) Int. Cl.: B62J 1/02, B62J 1/18, H02N 15/00

(54) **BICYCLE INCLUDING LEVITATION SEAT AND MAGNETIC FORCE ADJUSTMENT METHOD**

(30) Priority: 30.07.2020 US 202063058747 P; 10.06.2021 CN 202110647087
(71) Applicant: Wei, Hong-Fan, Taipei City 11445 (TW)
(72) Inventor: Wei, Hong-Fan, Taipei City 11445 (TW)
(74) Representative: Viering, Jentschura & Partner mbB Patent- und Rechtsanwälte

(57) **Abstract**

A bicycle (1) including a levitation seat (10B), and a magnetic force adjustment method are provided. The bicycle (1) includes a bicycle body (10), a seat base (10A) disposed on the bicycle body (10), the levitation seat (10B) disposed on one side of the seat base (10A), a control module (11), a battery module (12), and a magnetic force adjustment module (13) including a first magnetic force adjustment unit (131) and a second magnetic force adjustment unit (132). The first magnetic force adjustment unit (131) is disposed on the seat base (10A), and the second magnetic force adjustment unit (132) is disposed on the levitation seat (10B). The control module (11) respectively provides a plurality of control signals to the battery module (12) and the first magnetic force adjustment unit (131) and the second magnetic force adjustment unit (132) of the magnetic force adjustment module (13).

## Description

### FIELD OF THE DISCLOSURE

The present disclosure relates to a bicycle and a magnetic force adjustment method, and more particularly to a bicycle including a levitation seat and a magnetic force adjustment method adapted to the bicycle.

### BACKGROUND OF THE DISCLOSURE

For a conventional bicycle, one important feature that bicycle riders pay attention to is the seating comfort.

Therefore, how to provide a bicycle including a levitation seat for purposes of improving seating comfort has become an important issue in the industry.

### SUMMARY OF THE DISCLOSURE

In response to the above-referenced technical inadequacy, the present disclosure provides a bicycle including a levitation seat. The bicycle includes a bicycle body, a seat base, the levitation seat, a control module, a battery module, and a magnetic force adjustment module. The seat base is disposed on the bicycle body. The levitation seat is disposed on one side of the seat base. The magnetic force adjustment module includes a first magnetic force adjustment unit and a second magnetic force adjustment unit. The first magnetic force adjustment unit is disposed on the seat base, the second magnetic force adjustment unit is disposed on the levitation seat, and the first magnetic force adjustment unit and the second magnetic force adjustment unit are correspondingly disposed. The control module is electrically connected to the battery module and the first magnetic force adjustment unit and the second magnetic force adjustment unit of the magnetic force adjustment module. The control module respectively provides a plurality of control signals to the battery module and the first magnetic force adjustment unit and the second magnetic force adjustment unit of the magnetic force adjustment module, so that a magnetic force is generated between the first magnetic force adjustment unit and the second magnetic force adjustment unit that are correspondingly disposed, and the levitation seat is disposed above the seat base by a first predetermined distance.

In another aspect, the present disclosure provides a magnetic force adjustment method adapted to a bicycle including a levitation seat. The bicycle includes a bicycle body, a magnetic force adjustment module, a seat base, and the levitation seat. The seat base and the levitation seat are correspondingly disposed, and the magnetic force adjustment module includes a first magnetic force adjustment unit and a second magnetic force adjustment unit. The first magnetic force adjustment unit is disposed on the seat base, and the second magnetic force adjustment unit is disposed on the levitation seat. The magnetic force adjustment method is as follows:
providing, by a first slew rate, at least one of a plurality of first currents that is increased gradually to the first magnetic force adjustment unit of the magnetic force adjustment module, until a value of the at least one of the plurality of first currents is increased to a first current predetermined value;
continuously adjusting the at least one of the plurality of first currents to be within a current range; and
when the bicycle is stopped and no weight is detected on the levitation seat, providing, by a second slew rate, at least one of a plurality of second currents that is decreased gradually to the first magnetic force adjustment unit of the magnetic force adjustment module, until a value of the at least one of the plurality of second currents is decreased to 0.

One of the advantageous effects of the present disclosure is that, in the bicycle including the levitation seat and the magnetic force adjustment method provided by the present disclosure, the levitation seat can be effectively controlled, and a comfortable seating experience can be provided under different bicycle riding statuses.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The described embodiments may be better understood by reference to the following description and the accompanying drawings, in which:
FIG. 1 is a schematic view of a bicycle according to a first embodiment of the present disclosure;
FIG. 2 is another schematic view of the bicycle according to the first embodiment of the present disclosure;
FIG. 3 is a functional block diagram of the bicycle according to the first embodiment of the present disclosure;
FIG. 4 is a schematic view of a seat base and a levitation seat according to the first embodiment of the present disclosure;
FIG. 5 is another schematic view of the seat base and the levitation seat according to the first embodiment of the present disclosure;
FIG. 6 is yet another schematic view of the seat base and the levitation seat according to the first embodiment of the present disclosure;
FIG. 7 is still another schematic view of the seat base and the levitation seat according to the first embodiment of the present disclosure;
FIG. 8 is still yet another schematic view of the seat base and the levitation seat according to the first embodiment of the present disclosure;
FIG. 9 is still yet another schematic view of the seat base and the levitation seat according to the first embodiment of the present disclosure;
FIG. 10 is a schematic view of the levitation seat according to the first embodiment of the present disclosure;
FIG. 11 is another schematic view of the levitation seat according to the first embodiment of the present disclosure;
FIG. 12 is yet another schematic view of the levitation seat according to the first embodiment of the present disclosure;
FIG. 13 is still yet another schematic view of the seat base and the levitation seat according to the first embodiment of the present disclosure;
FIG. 14 is still yet another schematic view of the seat base and the levitation seat according to the first embodiment of the present disclosure;
FIG. 15 is a flowchart of a magnetic force adjustment method according to a second embodiment of the present disclosure; and
FIG. 16 is another flowchart of the magnetic force adjustment method according to the second embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

The present disclosure provides a bicycle including a levitation seat, which can improve user comfort and a shock-absorbing effect.

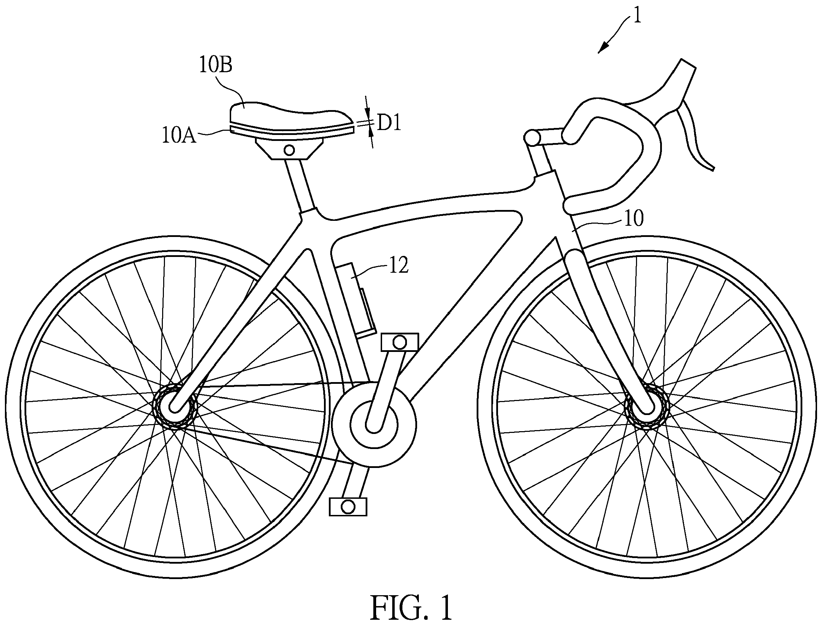

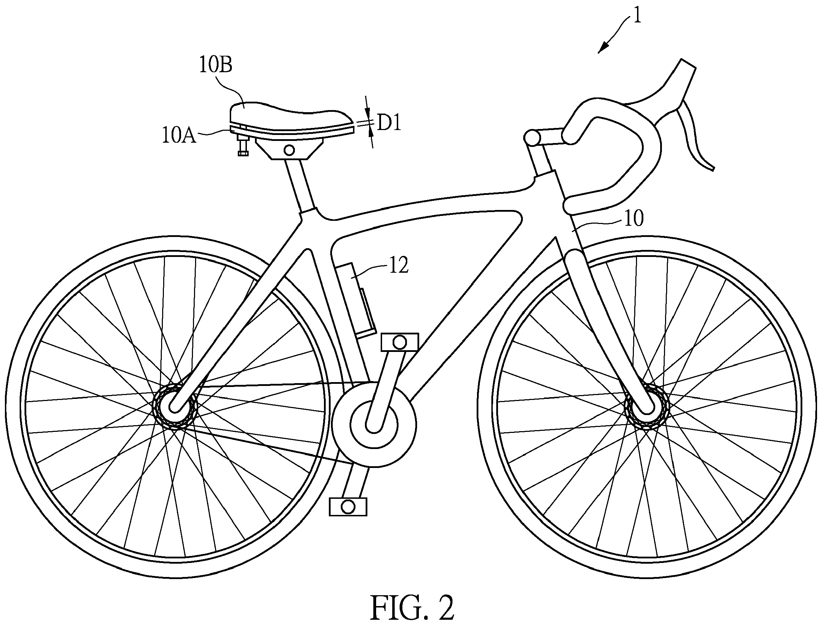

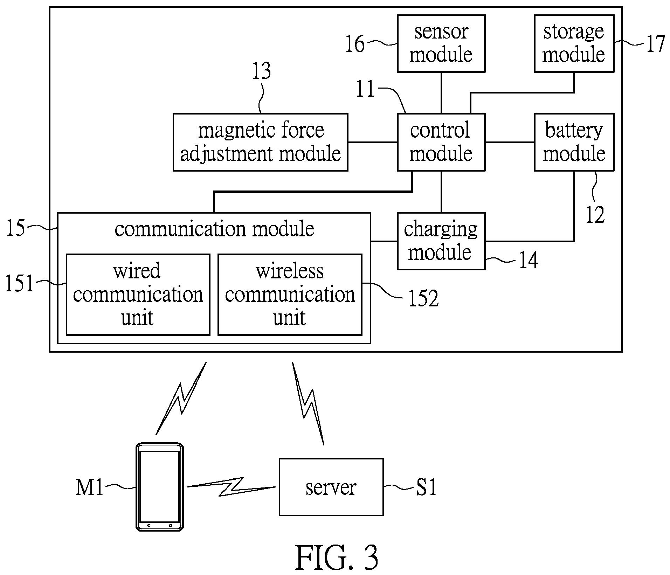

Referring to FIG. 1, FIG. 2, and FIG. 3, FIG. 1 is a schematic view of the bicycle according to a first embodiment of the present disclosure, FIG. 2 is another schematic view of the bicycle according to the first embodiment of the present disclosure, and FIG. 3 is a functional block diagram of the bicycle according to the first embodiment of the present disclosure.

A bicycle 1 includes a bicycle body 10, a seat base 10A, a levitation seat 10B, a control module 11, a battery module 12, a magnetic force adjustment module 13, a charging module 14, a communication module 15, a sensor module 16, and a storage module 17. The control module 11 is electrically connected to the battery module 12, the magnetic force adjustment module 13, the charging module 14, the communication module 15, the sensor module 16, and the storage module 17.

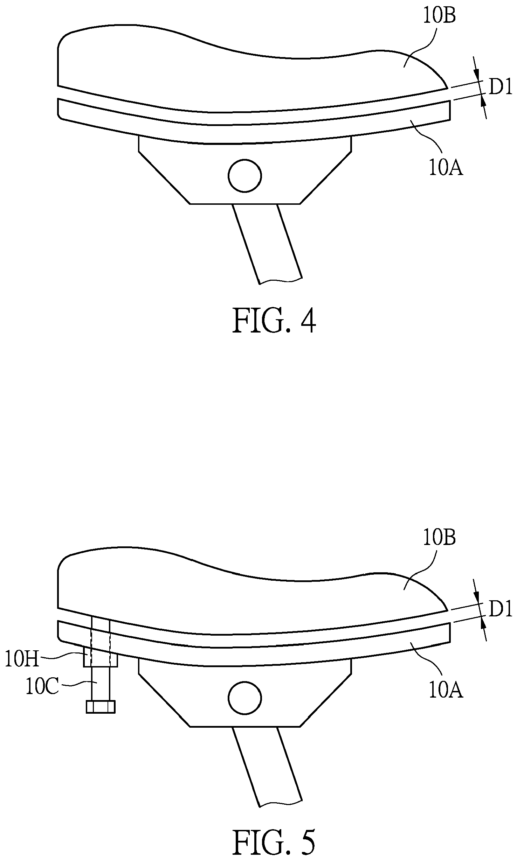

Referring to FIG. 4 and FIG. 5, FIG. 4 is a schematic view of a seat base and a levitation seat according to the first embodiment of the present disclosure, and FIG. 5 is another schematic view of the seat base and the levitation seat according to the first embodiment of the present disclosure.

The seat base 10A is disposed on the bicycle body 10, the bicycle body 10 includes a bicycle frame (not shown in figures), bicycle tires (not shown in figures), and a transmission device (not shown in figures). In this embodiment, the levitation seat 10B is disposed on the seat base 10A. The magnetic force adjustment module 13 includes a first magnetic force adjustment unit 131 and a second magnetic force adjustment unit 132. The first magnetic force adjustment unit 131 is disposed on the seat base 10A, and the second magnetic force adjustment unit 132 is disposed on the levitation seat 10B.

When the magnetic force adjustment module 13 is switched on, the levitation seat 10B can levitate above the seat base 10A by a distance through a magnetic force of the magnetic force adjustment module 13.

The control module 11 can be a central processing unit (CPU), an application-specific integrated circuit (ASIC), or a micro control unit (MCU).

The battery module 12 can be a rechargeable battery module, and can be a lithium-ion battery, a nickel-metal hydride battery, or a lithium-ion polymer battery.

The charging module 14 can be a direct-current to direct-current (DC-DC) voltage converter or an alternating-current to direct-current (AC-DC) voltage converter. The charging module 14 is electrically connected to the battery module 12.

In this embodiment, the charging module 14 is disposed on the transmission device (not shown in figures) of the bicycle 1 to convert energy from rotation of gears of the transmission device (not shown in figures) into an electrical energy, so as to charge the battery module 12.

The communication module 15 includes a wired communication unit 151 and a wireless communication unit 152. The wired communication unit 151 can be a connector (not shown in figures) or a communication cable (not shown in figures). The control module 11 is electrically connected to a mobile device M1 via the connector (not shown in figures). The mobile device M1 can be a smart phone, a tablet computer, or a wearable electronic device. The connector can be a lightning connector, a type-C universal serial bus (USB) connector, or a micro USB connector. The wireless communication unit 152 can be a WI-FI^{®} communication unit, a BLUETOOTH^{®} communication unit, a Zigbee communication unit, a LoRa communication unit, a Sigfox communication unit, or an NB-IoT communication unit.

The sensor module 16 includes multiple sensors, such as a gyro sensor, a geomagnetic sensor, an infrared sensor, a laser sensor, an illumination sensor, an olfactory sensor, a video capturing sensor or an accelerometer. The infrared sensor or the laser sensor is disposed in front of the bicycle 1 for detecting conditions of a path (an uphill slope or a downhill slope), detecting whether or not obstacles are present on the path, and detecting a distance between the bicycle 1 and the obstacles. In this embodiment, the sensor module 16 includes at least the gyro sensor (not shown in figures) or the accelerometer.

The storage module 17 is used to store parameters of the magnetic force when a user uses the levitation seat 10B and parameters of user habits.

The bicycle 1 has a network communication function and can be communicatively connected with a server S 1 through a network of the mobile device M1.

Referring to FIG. 4, FIG. 4 is a schematic diagram of the levitation seat 10B being disposed above the seat base 10A by a first predetermined distance D1 through magnetic suspension. In this embodiment, a magnitude of a magnetic force between the seat base 10A and the levitation seat 10B can be adjusted by using the magnetic force adjustment module 13.

Referring to FIG. 5, FIG. 5 is also a schematic diagram of the levitation seat 10B being disposed above the seat base 10A by the first predetermined distance D1 through magnetic suspension. However, the levitation seat 10B includes a traction column 10C. The traction column 10C is disposed in a traction hole 10H of the seat base 10A. When the levitation seat 10B is levitated by the magnetic force of the magnetic force adjustment module 13, one side of the levitation seat 10B can be bound to the traction hole 10H of the seat base 10A. In this way, the levitation seat 10B does not separate from the bicycle body 10 due to high intensity exercises or collisions with external forces. In this embodiment, the traction column 10C is movably disposed in the traction hole 10H.

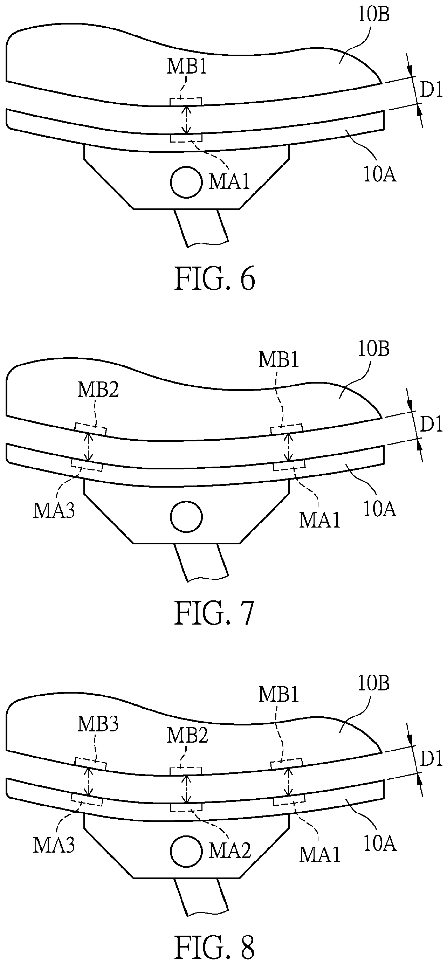

Reference is made to FIG. 6, FIG. 7, and FIG. 8. FIG. 6 is yet another schematic view of the seat base and the levitation seat according to the first embodiment of the present disclosure, FIG. 7 is still another schematic view of the seat base and the levitation seat according to the first embodiment of the present disclosure, and FIG. 8 is still yet another schematic view of the seat base and the levitation seat according to the first embodiment of the present disclosure.

Referring to FIG. 6, the first magnetic force adjustment unit 131 of the magnetic force adjustment module 13 includes a first base magnetic force element MA1 that is disposed at a central region of the seat base 10A. The second magnetic force adjustment unit 132 of the magnetic force adjustment module 13 includes a first seat magnetic force element MB1 that is disposed at a central region of the levitation seat 10B. The first base magnetic force element MA1 and the first seat magnetic force element MB1 are correspondingly disposed.

In this embodiment, the first seat magnetic force element MB 1 is a strong magnet, and the first base magnetic force element MA1 is an electromagnet element. The first base magnetic force element MA1 is electrically connected to the control module 11 and the battery module 12. The battery module 12 provides electrical energy to the first base magnetic force element MA1 and the control module 11.

Referring to FIG. 7, the first magnetic force adjustment unit 131 of the magnetic force adjustment module 13 includes the first base magnetic force element MA1 and a second base magnetic force element MA2 that are respectively disposed at a front end and a rear end of the seat base 10A. The second magnetic force adjustment unit 132 of the magnetic force adjustment module 13 includes the first seat magnetic force element MB1 and a second seat magnetic force element MB2 that are respectively disposed at a front end and a rear end of the levitation seat 10B. The first base magnetic force element MA1 and the first seat magnetic force element MB1 are correspondingly disposed, and the second base magnetic force element MA2 and the second seat magnetic force element MB2 are correspondingly disposed.

To put it simply, the second base magnetic force element MA2 is disposed on one side of the first base magnetic force element MA1, and the second seat magnetic force element MB2 is disposed on one side of the first seat magnetic force element MB1. The second base magnetic force element MA2 and the second seat magnetic force element MB2 are correspondingly disposed.

In this embodiment, each of the first seat magnetic force element MB 1 and the second seat magnetic force element MB2 is a strong magnet, and each of the first base magnetic force element MA1 and the second base magnetic force element MA2 is an electromagnet element. The first base magnetic force element MA1 and the second base magnetic force element MA2 are electrically connected to the control module 11 and the battery module 12. The battery module 12 provides electrical energy to the first base magnetic force element MA1, the second base magnetic force element MA2, and the control module 11.

Referring to FIG. 8, the first magnetic force adjustment unit 131 of the magnetic force adjustment module 13 includes the first base magnetic force element MA1, the second base magnetic force element MA2, and a third base magnetic force element MA3 that are respectively disposed at the front end, the central region, and the rear end of the seat base 10A. The second magnetic force adjustment unit 132 of the magnetic force adjustment module 13 includes the first seat magnetic force element MB1, the second seat magnetic force element MB2, and a third seat magnetic force element MB3 that are respectively disposed at the front end, the central region, and the rear end of the levitation seat 10B. The first base magnetic force element MA1 and the first seat magnetic force element MB1 are correspondingly disposed. The second base magnetic force element MA2 and the second seat magnetic force element MB2 are correspondingly disposed. The third base magnetic force element MA3 and the third seat magnetic force element MB3 are correspondingly disposed.

In this embodiment, each of the first seat magnetic force element MB1, the second seat magnetic force element MB2, and the third seat magnetic force element MB3 is a strong magnet, and each of the first base magnetic force element MA1, the second base magnetic force element MA2, and the third base magnetic force element MA3 is an electromagnet element. The first base magnetic force element MA1, the second base magnetic force element MA2, and the third base magnetic force element MA3 are electrically connected to the control module 11 and the battery module 12. The battery module 12 provides electrical energy to the first base magnetic force element MA1, the second base magnetic force element MA2, the third base magnetic force element MA3, and the control module 11. In this embodiment, positions and quantities of the magnetic force elements can be adjusted according to practical requirements, and are not limited in the present disclosure.

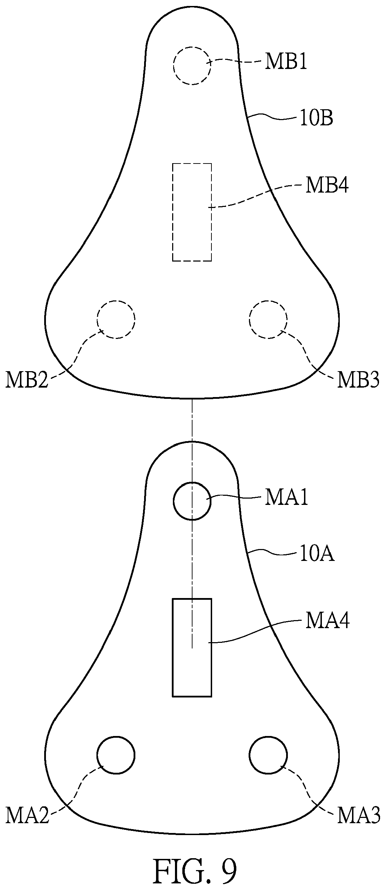

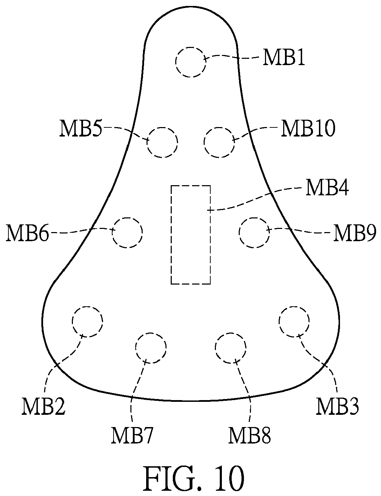

Referring to FIG. 9 and FIG. 10, FIG. 9 is still yet another schematic view of the seat base and the levitation seat according to the first embodiment of the present disclosure, and FIG. 10 is a schematic view of the levitation seat according to the first embodiment of the present disclosure.

Referring to FIG. 9, the first magnetic force adjustment unit 131 of the magnetic force adjustment module 13 includes the first base magnetic force element MA1, the second base magnetic force element MA2, the third base magnetic force element MA3, and a fourth base magnetic force element MA4 that are respectively disposed at three corners and the central region of the seat base 10A. The first base magnetic force element MA1, the second base magnetic force element MA2, and the third base magnetic force element MA3 that are disposed at the three corners of the seat base 10A are in a triangular arrangement. The fourth base magnetic force element MA4 is disposed at the central region of the seat base 10A.

The second magnetic force adjustment unit 132 of the magnetic force adjustment module 13 includes the first seat magnetic force element MB1, the second seat magnetic force element MB2, the third seat magnetic force element MB3, and a fourth seat magnetic force element MB4 that are respectively disposed at three corners and the central region of the levitation seat 10B. The first seat magnetic force element MB1, the second seat magnetic force element MB2, and the third seat magnetic force element MB3 that are disposed at the three corners of the levitation seat 10B are in a triangular arrangement. The fourth seat magnetic force element MB4 is disposed at the central region of the levitation seat 10B.

In one embodiment not shown in figures, the second base magnetic force element MA2, the third base magnetic force element MA3, and the fourth base magnetic force element MA4 are disposed at a periphery of the first base magnetic force element MA1, and the second seat magnetic force element MB2, the third seat magnetic force element MB3, and the fourth seat magnetic force element MB4 are disposed at a periphery of the first seat magnetic force element MB 1.

The first base magnetic force element MA1 and the first seat magnetic force element MB1 are correspondingly disposed. The second base magnetic force element MA2 and the second seat magnetic force element MB2 are correspondingly disposed. The third base magnetic force element MA3 and the third seat magnetic force element MB3 are correspondingly disposed. The fourth base magnetic force element MA4 and the fourth seat magnetic force element MB4 are correspondingly disposed.

In this embodiment, each of the first seat magnetic force element MB1, the second seat magnetic force element MB2, the third seat magnetic force element MB3, and the fourth seat magnetic force element MB4 is a strong magnet, and each of the first base magnetic force element MA1, the second base magnetic force element MA2, the third base magnetic force element MA3, and the fourth base magnetic force element MA4 is an electromagnet element. The first base magnetic force element MA1, the second base magnetic force element MA2, the third base magnetic force element MA3, and the fourth base magnetic force element MA4 are electrically connected to the control module 11 and the battery module 12. The battery module 12 provides electrical energy to the first base magnetic force element MA1, the second base magnetic force element MA2, the third base magnetic force element MA3, the fourth base magnetic force element MA4, and the control module 11.

Referring to FIG. 10, the first magnetic force adjustment unit 131 of the magnetic force adjustment module 13 includes the first base magnetic force element MA1, the second base magnetic force element MA2, the third base magnetic force element MA3, and the fourth base magnetic force element MA4 that are respectively disposed at three corners and the central region of the seat base 10A. The first base magnetic force element MA1, the second base magnetic force element MA2, and the third base magnetic force element MA3 that are disposed at the three corners of the seat base 10A are in a triangular arrangement. The fourth base magnetic force element MA4 is disposed at the central region of the seat base 10A.

The second magnetic force adjustment unit 132 of the magnetic force adjustment module 13 includes the first seat magnetic force element MB1, the second seat magnetic force element MB2, the third seat magnetic force element MB3, the fourth seat magnetic force element MB4, a fifth seat magnetic force element MB5, a sixth seat magnetic force element MB6, a seventh seat magnetic force element MB7, an eighth seat magnetic force element MB8, a ninth seat magnetic force element MB9, and a tenth seat magnetic force element MB 10 that are respectively disposed at a periphery and the central region of the levitation seat 10B.

The fourth seat magnetic force element MB4 is disposed at the central region of the levitation seat 10B, and the first seat magnetic force element MB1, the second seat magnetic force element MB2, the third seat magnetic force element MB3, the fifth seat magnetic force element MB5, the sixth seat magnetic force element MB6, the seventh seat magnetic force element MB7, the eighth seat magnetic force element MB8, the ninth seat magnetic force element MB9, and the tenth seat magnetic force element MB10 are respectively disposed at the periphery of the levitation seat 10B.

In this embodiment, the seat base 10A includes a first base magnetic force element (not shown in figures), a second base magnetic force element (not shown in figures), a third base magnetic force element (not shown in figures), a fourth base magnetic force element (not shown in figures), a fifth base magnetic force element (not shown in figures), a sixth base magnetic force element (not shown in figures), a seventh base magnetic force element (not shown in figures), an eighth base magnetic force element (not shown in figures), a ninth base magnetic force element (not shown in figures), and a tenth base magnetic force element (not shown in figures) that are respectively disposed at a periphery and the central region of the seat base 10A. The base magnetic force elements (not shown in figures) of the seat base 10A and the seat magnetic force elements of the levitation seat 10B are correspondingly disposed.

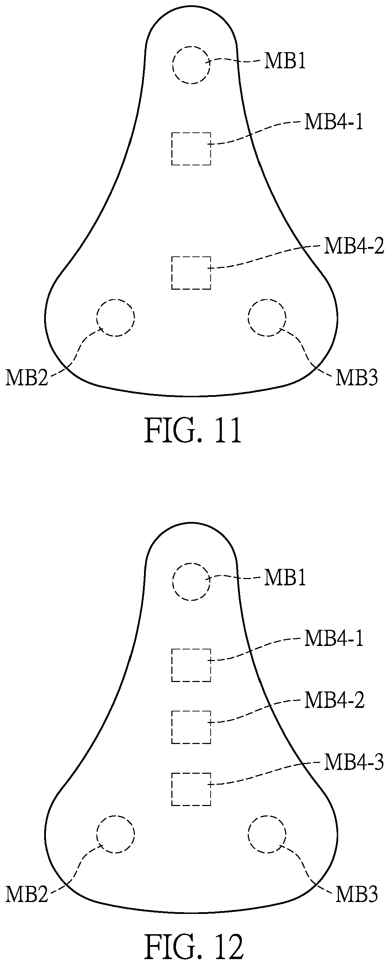

Referring to FIG. 11 and FIG. 12, FIG. 11 is another schematic view of the levitation seat according to the first embodiment of the present disclosure, and FIG. 12 is yet another schematic view of the levitation seat according to the first embodiment of the present disclosure. FIG. 11 and FIG. 12 are different implementations of the magnetic force adjustment module 13 of the present disclosure.

In FIG. 11, the seat magnetic force element disposed on the central region of the levitation seat 10B is configured to include a seat magnetic force element MB4-1 and a seat magnetic force element MB4-2.

In FIG. 12, the seat magnetic force element disposed on the central region of the levitation seat 10B is configured to include the seat magnetic force element MB4-1, the seat magnetic force element MB4-2, and a seat magnetic force element MB4-3.

In this embodiment, the control module 11 can respectively adjust magnetic forces of multiple magnetic force elements, so as to adjust a front-rear tilting angle or a left-right tilting angle of the levitation seat 10B. The control module 11 can determine whether the path is uphill or downhill through the sensing signal of the gyro sensor or a multi-axis accelerometer of the sensor module 16, and adjust a distance and an angle between the seat base 10A and the levitation seat 10B.

That is, the control module 11 can provide a plurality of control signals to the first magnetic force adjustment unit 131 of the seat base 10A according to riding status signals provided by the sensor module 16, so that a first angle θ1 or a second angle θ2 is defined between the seat base 10A and the levitation seat 10B.

The seat base 10A has the front end and the rear end. The levitation seat 10B has the front end and the rear end. The first angle θ1 is defined between the front end of the seat base 10A and the front end of the levitation seat 10B. The second angle θ2 is defined between the rear end of the seat base 10A and the rear end of the levitation seat 10B.

The gyro sensor or the accelerometer of the sensor module 16 can provide the riding status signals of the bicycle 1. The riding status signals include an uphill terrain signal, a downhill terrain signal, and a flat terrain signal.

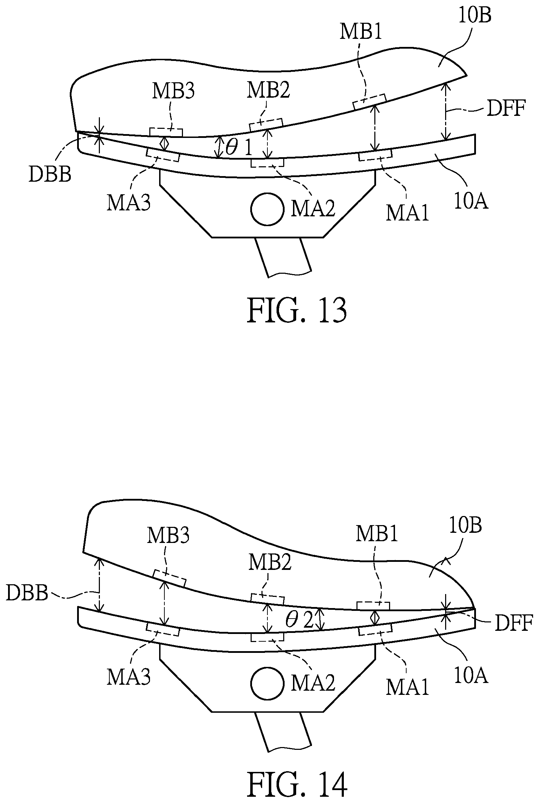

Referring to FIG. 13 and FIG. 14, FIG. 13 is still yet another schematic view of the seat base and the levitation seat according to the first embodiment of the present disclosure, and FIG. 14 is still yet another schematic view of the seat base and the levitation seat according to the first embodiment of the present disclosure.

As shown in FIG. 13, an included angle defined between the seat base 10A and the levitation seat 10B is the first angle θ1. A repulsive force between the front ends of the seat base 10A and the levitation seat 10B is greater than a repulsive force between the rear ends of the seat base 10A and the levitation seat 10B. The first angle θ1 can be changed by adjusting the magnitude of the repulsive force between the front ends of the seat base 10A and the levitation seat 10B and the repulsive force between the rear ends of the seat base 10A and the levitation seat 10B.

When the riding status signal provided by the sensor module 16 to the control module 11 is the downhill terrain signal, a rear end distance DBB defined between the rear end of the levitation seat 10B and the rear end of the seat base 10A is less than a front end distance DFF defined between the front end of the levitation seat 10B and the front end of the seat base 10A.

As shown in FIG. 14, an included angle defined between the seat base 10A and the levitation seat 10B is the second angle θ2. The repulsive force between the front ends of the seat base 10A and the levitation seat 10B is less than the repulsive force between the rear ends of the seat base 10A and the levitation seat 10B. The second angle θ2 can be can be changed by adjusting the magnitude of the repulsive force between the front ends of the seat base 10A and the levitation seat 10B and the repulsive force between the rear ends of the seat base 10A and the levitation seat 10B.

That is, when the riding status signal provided by the sensor module 16 to the control module 11 is the uphill terrain signal, the rear end distance DBB defined between the rear end of the levitation seat 10B and the rear end of the seat base 10A is greater than the front end distance DFF defined between the front end of the levitation seat 10B and the front end of the seat base 10A.

In other words, the sensor module 16 includes the gyro sensor, and the control module 11 can determine whether the path that the bicycle 1 is traveling is an uphill path or a downhill path according to changes in signals of the gyro sensor, so as to adjust the angle between the levitation seat 10B and the seat base 10A accordingly. For example, when the bicycle 1 is traveling uphill, the repulsive force between the front ends of the levitation seat 10B and the seat base 10A is reduced, and the repulsive force between the rear ends of the levitation seat 10B and the seat base 10A is increased, such that the front end of the levitation seat 10B is tilted downward.

When the bicycle 1 is traveling downhill, the repulsive force between the front ends of the levitation seat 10B and the seat base 10A is increased, and the repulsive force between the rear ends of the levitation seat 10B and the seat base 10A is reduced, such that the rear end of the levitation seat 10B is tilted downward. That is, the user can lean toward the rear end of the levitation seat 10B.

The sensor module 16 further includes a pressure sensor disposed on the levitation seat 10B to detect pressure distribution parameters when the user sits on the levitation seat 10B. The control module 11 can adjust the magnetic force provided by the magnetic force adjustment module 13 based on the pressure distribution parameters detected by the pressure sensor.

Furthermore, the control module 11 can continuously adjust a magnitude of the magnetic force provided by the magnetic force adjustment module 13 to be within a magnetic force range in small increments, so as to improve the user comfort and the shock-absorbing effect when the user rides the bicycle 1.

### [Second Embodiment]

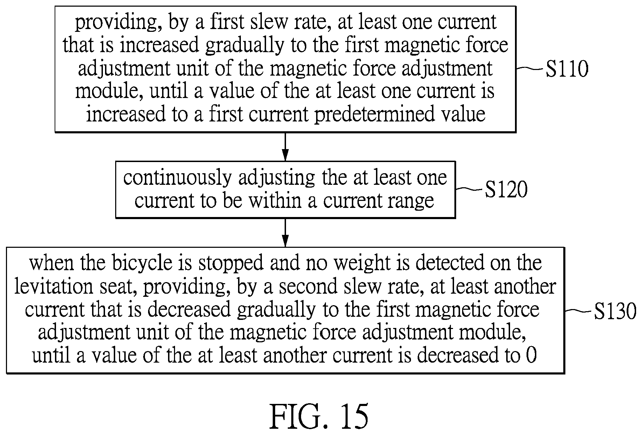

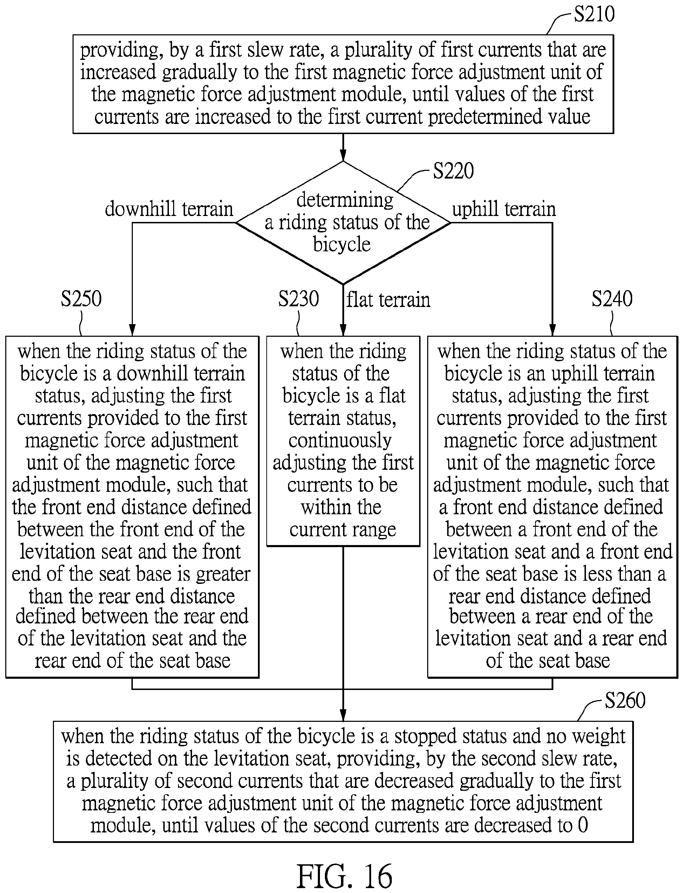

Reference is made to FIG. 15 and FIG. 16. FIG. 15 is a flowchart of a magnetic force adjustment method according to a second embodiment of the present disclosure, and FIG. 16 is another flowchart of the magnetic force adjustment method according to the second embodiment of the present disclosure.

The magnetic force adjustment method of this embodiment is adapted to the bicycle 1 including the levitation seat of the first embodiment, and the structures and functions of the bicycle 1 are not reiterated herein.

Furthermore, the magnetic force adjustment method for the levitation seat provided in the present disclosure can activate and control the levitation seat 10B and the seat base 10A. The magnetic force adjustment method includes steps as follows.

Step S110: providing, by a first slew rate, at least one current that is increased gradually to the first magnetic force adjustment unit of the magnetic force adjustment module, until a value of the at least one current is increased to a first current predetermined value;

Step S120: continuously adjusting the at least one current to be within a current range; and

Step S130: when the bicycle is stopped and no weight is detected on the levitation seat, providing, by a second slew rate, at least another current that is decreased gradually to the first magnetic force adjustment unit of the magnetic force adjustment module, until a value of the at least another current is decreased to 0.

In step S110, the first current predetermined value can correspond to a first magnetic force. The first slew rate is a low slope slew rate having a gentle upward slope.

In step S120, the current range corresponds to a magnetic force range.

In step S130, the sensor module 16 further includes the pressure sensor or a weight sensor for detecting whether or not there is a pressure distribution or a weight value on the levitation seat 10B. The second slew rate is a low slope slew rate having a gentle downward slope.

Furthermore, reference is made to FIG. 16, and the magnetic force adjustment method for the levitation seat provided in this embodiment further includes steps as follows.

Step S210: providing, by a first slew rate, a plurality of first currents that are increased gradually to the first magnetic force adjustment unit of the magnetic force adjustment module, until values of the first currents are increased to the first current predetermined value;

Step S220: determining a riding status of the bicycle;

Step S230: when the riding status of the bicycle is a flat terrain status, continuously adjusting the first currents to be within the current range;

Step S240: when the riding status of the bicycle is an uphill terrain status, adjusting the first currents provided to the first magnetic force adjustment unit of the magnetic force adjustment module, such that a front end distance defined between a front end of the levitation seat and a front end of the seat base is less than a rear end distance defined between a rear end of the levitation seat and a rear end of the seat base;

Step S250: when the riding status of the bicycle is a downhill terrain status, adjusting the first currents provided to the first magnetic force adjustment unit of the magnetic force adjustment module, such that the front end distance defined between the front end of the levitation seat and the front end of the seat base is greater than the rear end distance defined between the rear end of the levitation seat and the rear end of the seat base; and

Step S260: when the riding status of the bicycle is a stopped status and no weight is detected on the levitation seat, providing, by the second slew rate, a plurality of second currents that are decreased gradually to the first magnetic force adjustment unit of the magnetic force adjustment module, until values of the second currents are decreased to 0.

In step S210, the first current predetermined value can correspond to the first magnetic force. The first slew rate is a low slope slew rate having a gentle upward slope.

In step S220, step S230, step S240, and step S250, the control module 11 determines the riding status of the bicycle 1 according to the gyro sensor or the multi-axis accelerometer of the sensor module 16. The riding statuses of the bicycle 1 include the flat terrain status, the uphill terrain status, the downhill terrain status, and the stopped status.

When the riding status of the bicycle 1 is the flat terrain status, the control module 11 continuously controls currents provided to the magnetic force adjustment module 13 to be within a current range.

In step S240 and step S250, the sensor module 16 further includes a pressure sensor for detecting whether or not there is a pressure distribution on the levitation seat 10B. The control module 11 detects whether or not there is a weight on the levitation seat 10B by using the pressure sensor of the sensor module 16.

As shown in FIG. 13, the included angle defined between the seat base 10A and the levitation seat 10B is the first angle θ1. The repulsive force between the front ends of the seat base 10A and the levitation seat 10B is greater than the repulsive force between the rear ends of the seat base 10A and the levitation seat 10B. The first angle θ1 can be changed by adjusting the magnitude of the repulsive force between the front ends of the seat base 10A and the levitation seat 10B and the repulsive force between the rear ends of the seat base 10A and the levitation seat 10B.

When the riding status signal provided by the sensor module 16 to the control module 11 is the downhill terrain signal, the rear end distance DBB defined between the rear end of the levitation seat 10B and the rear end of the seat base 10A is less than the front end distance DFF defined between the front end of the levitation seat 10B and the front end of the seat base 10A.

As shown in FIG. 14, the included angle defined between the seat base 10A and the levitation seat 10B is the second angle θ2. The repulsive force between the front ends of the seat base 10A and the levitation seat 10B is less than the repulsive force between the rear ends of the seat base 10A and the levitation seat 10B. The second angle θ2 can be changed by adjusting the magnitude of the repulsive force between the front ends of the seat base 10A and the levitation seat 10B and the repulsive force between the rear ends of the seat base 10A and the levitation seat 10B.

That is, when the riding status signal provided by the sensor module 16 to the control module 11 is the uphill terrain signal, the rear end distance DBB defined between the rear end of the levitation seat 10B and the rear end of the seat base 10A is greater than the front end distance DFF defined between the front end of the levitation seat 10B and the front end of the seat base 10A.

In step S260, when the riding status of the bicycle 1 is the stopped status, and no weight is detected on the levitation seat 10B, the second currents that are decreased gradually are provided, by the second slew rate, to the first magnetic force adjustment unit 131 of the magnetic force adjustment module 13 until values of the second currents are decreased to 0, so that the levitation seat 10B is gently lowered to the seat base 10A.

### [Beneficial Effects of the Embodiments]

One of the advantageous effects of the present disclosure is that, in the bicycle including the levitation seat and the magnetic force adjustment method provided by the present disclosure, the levitation seat can be effectively controlled, and a comfortable seating experience can be provided under different bicycle riding statuses.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A bicycle (1), **characterized by** comprising:
a bicycle body (10);
a seat base (10A) disposed on the bicycle body (10);
a levitation seat (10B) disposed on one side of the seat base (10A);
a control module (11);
a battery module (12); and
a magnetic force adjustment module (13) including a first magnetic force adjustment unit (131) and a second magnetic force adjustment unit (132), wherein the first magnetic force adjustment unit (131) is disposed on the seat base (10A), the second magnetic force adjustment unit (132) is disposed on the levitation seat (10B), and the first magnetic force adjustment unit (131) and the second magnetic force adjustment unit (132) are correspondingly disposed;
wherein the control module (11) is electrically connected to the battery module (12), and the first magnetic force adjustment unit (131) and the second magnetic force adjustment unit (132) of the magnetic force adjustment module (13);
wherein the control module (11) respectively provides a plurality of control signals to the battery module (12) and the first magnetic force adjustment unit (131) and the second magnetic force adjustment unit (132) of the magnetic force adjustment module (13), so that a magnetic force is generated between the first magnetic force adjustment unit (131) and the second magnetic force adjustment unit (132) that are correspondingly disposed, and the levitation seat (10B) is disposed above the seat base (10A) by a first predetermined distance (D1).

2. The bicycle (1) according to claim 1, **characterized in that** the levitation seat (10B) includes a traction column (10C), the seat base (10A) includes a traction hole (10H), and the traction column (10C) is movably disposed in the traction hole (10H).

3. The bicycle (1) according to claim 1, **characterized in that** the first magnetic force adjustment unit (131) includes a first base magnetic force element (MA1), and the second magnetic force adjustment unit (132) includes a first seat magnetic force element (MB1).

4. The bicycle (1) according to claim 1, **characterized in that** the first magnetic force adjustment unit (131) includes a plurality of first base magnetic force elements (MA1), the second magnetic force adjustment unit (132) includes a plurality of first seat magnetic force elements (MB1), and the first base magnetic force elements (MA1) and the first seat magnetic force elements (MB1) are correspondingly disposed.

5. The bicycle (1) according to claim 3, **characterized in that** the first base magnetic force element (MA1) is disposed at a central region of the seat base (10A), and the first seat magnetic force element (MB1) is disposed at a central region of the levitation seat (10B).

6. The bicycle (1) according to claim 3, **characterized in that** the first magnetic force adjustment unit (131) further includes a second base magnetic force element (MA2), and the second magnetic force adjustment unit (132) further includes a second seat magnetic force element (MB2), and wherein the second base magnetic force element (MA2) is disposed on one side of the first base magnetic force element (MA1), the second seat magnetic force element (MB2) is disposed on one side of the first seat magnetic force element (MB1), and the second base magnetic force element (MA2) and the second seat magnetic force element (MB2) are correspondingly disposed.

7. The bicycle (1) according to claim 3, **characterized in that** the first seat magnetic force element (MB1) is a strong magnet, and the first base magnetic force element (MA1) is an electromagnet element.

8. The bicycle (1) according to claim 1, **characterized in that** the first magnetic force adjustment unit (131) further includes a second base magnetic force element (MA2), and the second magnetic force adjustment unit (132) further includes a second seat magnetic force element (MB2), and wherein the second base magnetic force element (MA2) is disposed on one side of the first base magnetic force element (MA1), the second seat magnetic force element (MB2) is disposed on one side of the first seat magnetic force element (MB1), and the second base magnetic force element (MA2) and the second seat magnetic force element (MB2) are correspondingly disposed.

9. The bicycle (1) according to claim 8, **characterized in that** the first base magnetic force element (MA1) is disposed at a central region of the seat base (10A), and the first seat magnetic force element (MB1) is disposed at a central region of the levitation seat (10B).

10. The bicycle (1) according to claim 9, **characterized in that** the first magnetic force adjustment unit (131) further includes a third base magnetic force element (MA3) and a fourth base magnetic force element (MA4), and the second magnetic force adjustment unit (132) further includes a third seat magnetic force element (MB3) and a fourth seat magnetic force element (MB4), wherein the second base magnetic force element (MA2), the third base magnetic force element (MA3), and the fourth base magnetic force element (MA4) are disposed at a periphery of the first base magnetic force element (MA1), and the second seat magnetic force element (MB2), the third seat magnetic force element (MB3), and the fourth seat magnetic force element (MB4) are disposed at a periphery of the first seat magnetic force element (MB1), and wherein the third base magnetic force element (MA3) and the third seat magnetic force element (MB3) are correspondingly disposed, and the fourth base magnetic force element (MA4) and the fourth seat magnetic force element (MB4) are correspondingly disposed.

11. The bicycle (1) according to claim 1, **characterized by** further comprising a sensor module (16), wherein, according to a riding status signal of the sensor module (16), the control module (11) provides the plurality of control signals to the first magnetic force adjustment unit (131) of the seat base (10A), so that a first angle (θ1) or a second angle (θ2) is defined between the seat base (10A) and the levitation seat (10B).

12. The bicycle (1) according to claim 11, **characterized in that** the seat base (10A) has a front end and a rear end, and the levitation seat (10B) has a front end and a rear end, and wherein the first angle (θ1) is defined between the front end of the seat base (10A) and the front end of the levitation seat (10B), and the second angle (θ2) is defined between the rear end of the seat base (10A) and the rear end of the levitation seat (10B).

13. The bicycle (1) according to claim 12, **characterized in that** the sensor module (16) includes a gyro sensor or an accelerometer for providing the riding status signal of the bicycle (1), and the riding status signal includes an uphill terrain signal, a downhill terrain signal, and a flat terrain signal.

14. The bicycle (1) according to claim 13, **characterized in that**, when the riding status signal provided by the sensor module (16) to the control module (11) is the uphill terrain signal, a rear end distance (DBB) defined between the rear end of the levitation seat (10B) and the rear end of the seat base (10A) is greater than a front end distance (DFF) defined between the front end of the levitation seat (10B) and the front end of the seat base (10A).

15. The bicycle (1) according to claim 14, **characterized in that**, when the riding status signal provided by the sensor module (16) to the control module (11) is the downhill terrain signal, the rear end distance (DBB) defined between the rear end of the levitation seat (10B) and the rear end of the seat base (10A) is less than the front end distance (DFF) defined between the front end of the levitation seat (10B) and the front end of the seat base (10A).

16. The bicycle (1) according to claim 1, **characterized by** further comprising:
a storage module (17) electrically connected to the control module (11); and
a communication module (15) electrically connected to the control module (11), the communication module (15) including a wired communication unit (151) and a wireless communication unit (152), wherein the bicycle (1) is communicatively connected with a mobile device (M1) or a server (S1).

17. A magnetic force adjustment method adapted to a bicycle (1), **characterized in that** the bicycle (1) includes a bicycle body (10), a magnetic force adjustment module (13), a seat base (10A), and a levitation seat (10B), wherein the seat base (10A) and the levitation seat (10B) are correspondingly disposed, and the magnetic force adjustment module (13) includes a first magnetic force adjustment unit (131) and a second magnetic force adjustment unit (132), wherein the first magnetic force adjustment unit (131) is disposed on the seat base (10A), and the second magnetic force adjustment unit (132) is disposed on the levitation seat (10B), and wherein the magnetic force adjustment method comprises:
providing, by a first slew rate, at least one of a plurality of first currents that is increased gradually to the first magnetic force adjustment unit (131) of the magnetic force adjustment module (13) until a value of the at least one of the plurality of first currents is increased to a first current predetermined value;
continuously adjusting the at least one of the plurality of first currents to be within a current range; and
when the bicycle (1) is stopped and no weight is detected on the levitation seat (10B), providing, by a second slew rate, at least one of a plurality of second currents that is decreased gradually to the first magnetic force adjustment unit (131) of the magnetic force adjustment module (13) until a value of the at least one of the plurality of second currents is decreased to 0.

18. The magnetic force adjustment method according to claim 17, **characterized in that** the bicycle (1) further includes a sensor module (16), the sensor module (16) includes a pressure sensor, and the magnetic force adjustment method further comprises:
providing, by a first slew rate, the plurality of first currents that are increased gradually to the first magnetic force adjustment unit (131) of the magnetic force adjustment module (13) until values of the plurality of first currents are increased to the first current predetermined value;
determining a riding status of the bicycle (1);
when the riding status of the bicycle (1) is a flat terrain status, continuously adjusting the plurality of first currents to be within the current range;
when the riding status of the bicycle (1) is an uphill terrain status, adjusting the plurality of first currents provided to the first magnetic force adjustment unit (131) of the magnetic force adjustment module (13), such that a front end distance (DFF) defined between a front end of the levitation seat (10B) and a front end of the seat base (10A) is less than a rear end distance (DBB) defined between a rear end of the levitation seat (10B) and a rear end of the seat base (10A);
when the riding status of the bicycle (1) is a downhill terrain status, adjusting the plurality of first currents provided to the first magnetic force adjustment unit (131) of the magnetic force adjustment module (13), such that the front end distance (DFF) defined between the front end of the levitation seat (10B) and the front end of the seat base (10A) is greater than the rear end distance (DBB) defined between the rear end of the levitation seat (10B) and the rear end of the seat base (10A); and
when the riding status of the bicycle (1) is a stopped status and no weight is detected on the levitation seat (10B), providing, by the second slew rate, the plurality of second currents that are decreased gradually to the first magnetic force adjustment unit (131) of the magnetic force adjustment module (13) until values of the plurality of second currents are decreased to 0.

19. The magnetic force adjustment method according to claim 18, **characterized in that** the sensor module (16) includes the pressure sensor or a weight sensor for detecting whether or not the levitation seat (10B) carries a weight.
